# EUROPEAN PATENT APPLICATION

(11) **EP 1 405 720 A1**
(43) Date of publication of application: **07.04.2004**
(21) Application number: 02733477.0
(22) Date of filing: 11.06.2002
(51) Int. Cl.: B32B 27/32

(54) **MULTILAYER STRETCHED RESIN FILM**

(30) Priority: 12.06.2001 JP 2001177326
(71) Applicant: Yupo Corporation, Tokyo 101-0062 (JP)
(72) Inventor: YAMANAKA, Masaaki, Yupo Corporation, Kashima-gun, Ibaraki 314-0102 (JP); KIMURA, Kazuyuki, Yupo Corporation, Kashima-gun, Ibaraki 314-0102 (JP)
(74) Representative: VOSSIUS & PARTNER
(86) International application number: PCT/JP2002/005805
(87) International publication number: WO 2002/100640

(57) **Abstract**

The problem of the invention is to provide a multilayered resin stretched film made of a polypropylene based resin as a material, which is excellent in sheet fed offset printing properties, low-temperature heat sealing properties with a container, and unsealing properties, and a blister pack having excellent recycle properties.

The invention relates to a multilayered resin stretched film having an opacity of 70 % or more and capable of being sealed by heat and/or fusion, which has (i) a uniaxially stretched film substrate layer containing (A) from 40 to 90 % by weight of a propylene based polymer and (B) from 10 to 60 % by weight of an inorganic fine powder and/or an organic filler and having on at least one side thereof (ii) a printable, uniaxially stretched film surface layer containing (C) from 70 to 95 % by weight of a propylene based random copolymer and (D) from 5 to 30 % by weight of an antistatic agent.

## Description

### BACKGROUND OF THE INVENTION

### FIELD OF THE INVENTION

The present invention relates to a multilayered resin stretched film having an opacity of 70 % or more and capable of being sealed by heat and/or fusion, and further to a blister pack using the multilayered resin stretched film, which can be readily recycled.

### DESCRIPTION OF THE RELATED ART

Hitherto, polyvinyl chloride has been the main material used for blister pack storage containers in which daily necessaries, articles of stationery, and the like are packaged. Polyvinyl chloride provides a good balance of properties including processability, thermoformability, physical properties, and so on. Polypropylene, polystyrene, etc. have also been used.

Blister pack containers are generally relatively thick rigid containers having a thickness of from 0.2 to 1 mm for retaining the shape the blister. Waste gases created when blister packs are burned have created an environmental problem.

Natural paper or aluminum foil mounts (lids) are used to heat seal and/or fusion seal the package after goods have been stored in a blister pack. Both sides of the mount can be printed and may include a substrate and a heat sealing material coated or laminated on one side thereof. In these conventional lids mounts (lids) heat sealed natural paper or aluminum foil remains in the periphery of the container when the container is opened. It is therefore difficult to recycle the used blister containers and are instead subjected to burning treatment for disposal.

Blister packs having a mount comprising a thermoplastic resin formed by co-extruding or laminating a low-temperature heat sealable resin on the lid material or on the surface of the periphery of the container, by or coating a heat sealing agent thereon have recently become available. However, since most of these resins are different from the container resin they become foreign matter or cause discoloration during recycling and are therefore not normally recycled. Thus, many used containers and/or mounts are disposed by burning or the like.

Blister packs are required to be able to display information in the form of letters and figures regarding the performance, usefulness, etc. printed in high definition on their mounts. However, in mounts based on conventional materials, printing is performed by gravure printing, flexographic printing, etc., and hence it is difficult to carry out sheet fed offset printing.

An object of the invention is to provide a multilayered resin stretched film comprising a polypropylene based resin which is excellent in sheet fed offset printing properties and which can provide high definition printing. The film can also provide low-temperature heat sealing with a container, and provides desirable unsealing and recycle properties.

### DISCLOSURE OF THE INVENTION

In order to solve the foregoing problems, the present inventors made extensive and intensive investigations. As a result, it has been found that a uniaxially stretched multilayered resin film comprising proper amounts of a propylene based polymer and an inorganic fine powder and/or an organic filler compound therein has excellent characteristics for blister pack applications.

Specifically, the invention relates to a multilayered resin stretched film having an opacity of 70 % or more capable of being sealed by heat and/or fusion. The multilayer film comprises (i) a uniaxially stretched film substrate layer containing (A) from 40 to 90 % by weight of a propylene based polymer and (B) from 10 to 60 % by weight of an inorganic fine powder and/or an organic filler and having on at least one side thereof (ii) a printable, uniaxially stretched film surface layer containing (C) from 70 to 95 % by weight of a propylene based random copolymer and (D) from 5 to 30 % by weight of an antistatic agent.

The propylene based polymer (A) that is used in the substrate layer (i) of the multilayered resin stretched film of the invention may be a polymer containing propylene as the major component and is preferably (a-1) a random copolymer comprising from 2 to 10 % by weight of ethylene and from 90 to 98 % by weight of propylene, (a-2) a random copolymer comprising from 0 to 5 % by weight of ethylene, from 8 to 30 % by weight of butene-1, and from 65 to 92 % by weight of propylene, or (a-3) a propylene homopolymer. The' inorganic fine powder and/or organic filler (B) are preferably compounds containing mainly calcium carbonate or titanium oxide.

The propylene based random copolymer (C) that is present in the surface layer (ii) is preferably (b-1) a propylene-ethylene random copolymer or a propylene-butene-1 random copolymer polymerized by a metallocene catalyst and having an extraction amount at 40 °C using o-dichlorobenzene as a solvent of not more than 4.0 % by weight or (b-2) a random copolymer comprising from 2 to 10 % by weight of ethylene and from 90 to 98 % by weight of propylene or a random copolymer comprising from 0 to 5 % by weight of ethylene, from 8 to 30 % by weight of butene-1, and from 65 to 92 % by weight of propylene, each having a melting peak temperature by DSC in the range of from 110 to 140 °C.

Further, the antistatic agent (D) is preferably a resin composition comprising a polypropylene based resin, an aromatic ring-containing polyether ester amide, a polyamide resin, and/or a modified low-molecular weight polypropylene.

The opacity (JIS-P-8138) of the multilayered resin stretched film of the invention is preferably 70 % or more, and more preferably 80 % or more.

The blister pack of the invention is a transparent polypropylene based sheet container formed by thermoforming, in which goods are stored having a multilayered resin stretched film with both sides printed overlaid on the opened face of the container, and sealed from the upper face by heat and/or fusion.

### DETAILED DESCRIPTION OF THE INVENTION

The embodiment of the multilayered resin stretched film of the invention will be described in detail.

The multilayered resin stretched film of the invention may be a film mount containing a structural unit comprising (i) a substrate layer and (ii) a surface layer laminated on the substrate layer (i).

The structural unit may be a structure comprising (i) a substrate layer and (ii) a surface layer laminated on both sides of the substrate layer (i).

The substrate layer (i) contains (A) a propylene based polymer and (B) an inorganic fine power and/or an organic filler.

The propylene based polymer (A) that is present in the substrate layer (i) is not particularly limited so long as it is a polymer containing polymerized propylene as a monomer, and may be a propylene homopolymer in which only propylene is homopolymerized or a propylene copolymer in which propylene and one or more other polymerizable monomer are copolymerized. The propylene based polymer (A) is preferably a copolymer in which 50 % by weight or more, preferably 60 % by weight or more, and more preferably 65 % by weight or more of propylene is used and copolymerized as a monomer.

Specific examples include (a-1) a random copolymer comprising from 2 to 10 % by weight of ethylene and from 90 to 98 % by weight of propylene, (a-2) a random copolymer comprising from 0 to 5 % by weight of ethylene, from 8 to 30 % by weight of butene-1, and from 65 to 92 % by weight of propylene, and (a-3) a propylene homopolymer. The propylene homopolymer (a-3) is especially preferable.

In the present description the term "to" means the range including the numerical values described before and after this term.

The propylene based polymer (A) preferably has a melt flow rate (at 230 °C under a load of 2.16 kg) in the range of from 0.5 to 30 g/10 min.

Specific examples of the inorganic fine powder that may be present in the substrate layer (i) include calcium carbonate heavy, precipitated calcium carbonate light, calcined clay, talc, titanium oxide, barium sulfate, zinc oxide, magnesium oxide, diatomaceous earth, and silicon oxide. When heavy calcium carbonate or titanium oxide is used, a number of voids may be formed at the time of stretching, and such is preferable in obtaining white opaque film mounts.

The organic filler may include polyethylene terephthalate, polybutylene terephthalate, polycarbonates, nylon-6, nylon-6,6, homopolymers of cyclic olefins, and copolymers of a cyclic olefin and ethylene, each having a melting point of from 120 to 300 °C or a glass transition temperature of from 120 to 280 °C. Use of homopolymers of cyclic olefins or copolymers of a cyclic olefin and ethylene is preferable from the standpoint of handling.

For the substrate layer (i), one member may be selected from the foregoing fine powders or fillers and used singly, or two or more members thereof may be selected and used in combination.

The fine powder preferably has a mean particle size in the range of from 0.1 to 30 µm. If the particle size is less than 0.1 µm the generation of aggregates due to inferior dispersion likely to occurs when mixed with the propylene polymer, thereby resulting in stretch breakage. Also, formation of voids by stretching becomes difficult so that the desired white opaque stretched film mount is not obtained.

If the mean particle size is 30 µm or more, the stretching properties are largely lowered so that stretch breakage likely occurs. Also, the powder appears as a protrusion on the surface layer (ii), and the surface smoothness is lowered, whereby it becomes impossible to carry out high definition printing.

As the propylene based random copolymer (C) present in the surface layer (ii), (b-1) a propylene-ethylene random copolymer or a propylene-butene-1 random copolymer polymerized by a metallocene catalyst and having an extraction amount at 40 °C using o-dichlorobenzene as a solvent of not more than 4.0 % by weight or (b-2) a random copolymer comprising from 2 to 10 % by weight of ethylene and from 90 to 98 % by weight of propylene or a random copolymer comprising from 0 to 5 % by weight of ethylene and from 8 to 30 % by weight of butene-1 and from 65 to 92 % by weight of propylene, each having a melting peak temperature by DSC in the range of from 110 to 140 °C is preferable in obtaining the sealing strength (400 g/cm or more) necessary as a mount for blister pack.

As the antistatic agent (D) present in the surface layer (ii), a resin composition comprising a polypropylene based resin, an aromatic ring-containing polyether ester amide, a polyamide resin, and a modified low-molecular weight polypropylene is preferable because it has a lower reduction of sealing strength at low temperatures and improves printability. Such a resin composition may be used upon mixing, or may be used upon mixing one obtained by copolymerizing the modified low-molecular weight polypropylene in the polymerization step of the aromatic ring-containing polyether ester amide with the polyamide resin and the polypropylene.

Examples of the foregoing polyamide resin include ring-opening polymers of lactams having from 6 to 12 carbon atoms or more, polycondensates of aminocarboxylic acids having from 6 to 12 carbon atoms or more, and polycondensates of a dicarboxylic acid having from 4 to 20 carbon atoms and a diamine having from 6 to 12 carbon atoms or more.

Specific examples include nylon 66, nylon 69, nylon 610, nylon 612, nylon 6, nylon 11, nylon 12, and nylon 46. Also, copolyamides such as nylon 6/66, nylon 6/11, nylon 6/12, and nylon 6/66/12 can be used. Further, aromatic ring-containing polyamides obtained from an aromatic dicarboxylic acid such as terephthalic acid and isophthalic acid and m-xylenediamine or a fatty acid diamine can be used. Of these, nylon 66, nylon 6, and nylon 12 are especially preferable.

In the antistatic agent (D) , the content of the aromatic ring-containing polyether ester amide is usually in the range of from 40 to 90 % by weight, and preferably from 45 to 80 % by weight. When the content of the foregoing component is not more than 40 % by weight, the antistatic performance is not achieved, whereas when it is 90 % by weight or more, the film formability is lowered.

The contents of the polypropylene and the modified low-molecular weight polypropylene and the content of the polyamide resin may be adjusted within a range of usually from 0 to 20 % by weight, and preferably from 1 to 10 % by weight.

The substrate layer (i) is formed by stretching a resin composition containing from 40 to 90 % by weight of the propylene based polymer (A) and from 10 to 60 % by weight of the inorganic finer powder and/or organic filler (B).

The surface layer (ii) is formed by stretching a resin composition containing from 70 to 95 % by weight of the propylene based random copolymer (C) and from 5 to 30 % by weight of the polyether ester amide based antistatic agent (D).

The propylene polymer (A) in the substrate layer (i) contributes to the strength, rigidity and heat resistance of the multilayered resin stretched film, and hence, is present in an amount of 40 % by weight or more. When the compounding amount is less than 40 % by weight, sufficient strength, rigidity and heat resistance are not obtained, and moreover, stretch breakage or the like occurs, leading to a large reduction of formability.

The inorganic fine powder and/or organic filler (B) contributes to the opacity of the multilayered resin stretched film, and is compounded in an amount that is made 10 % by weight or more. When the compounding amount is less than 10 % by weight, a film mount having an opacity of 70 % or more, as required as a mount for blister pack, and more preferably 80 % or more, is not obtained. Also, when it is compounded in an amount exceeding 60 % by weight, stretch breakage or film breakage occurs, leading to a large reduction in formability.

In the surface layer (ii), the propylene based random copolymer (C) contributes to heat and fusion sealing strength and surface gloss, and hence, its compounding amount is made 70 % by weight or more. When the compounding amount is less than 70 % by weight, the heat and fusion sealing strength is lowered so that when formed into a blister pack there is a danger that goods stored in the container fly out at the time of conveyance or display in the store. Also, the gloss is lowered, and printed matters lose a gloss feeling when printed, leading to a reduction in decorating properties of goods.

In the surface layer (ii), the polyether ester amide based antistatic agent (D) contributes to ink adhesiveness in printability and paper feeding/discharging properties and ink adhesiveness in sheet fed offset printing, and hence, its compounding amount is made 5 % by weight or more. When the compounding amount exceeds 30 % by weight, a reduction in sealing strength against the container when sealed by heat and fusion may be large.

If desired, the resin compositions of the substrate layer (i) and the surface layer (ii) may additionally include a heat stabilizer, a UV stabilizer, an antioxidant, an anti-blocking agent, a nucleating agent, a lubricant, a dispersant, etc. It is preferable that these are compounded in a proportion of not more than 3 % by weight.

The total thickness of the multilayered resin stretched film is preferably in the range of from 40 to 400 µm, more preferably from 60 to 350 µm, and further preferably from 80 to 300 µm. The thickness of the substrate layer (i) is preferable from 50 % to 80 % of the total thickness.

### [Production and processing of multilayered resin stretched film]

The multilayered resin stretched film of the invention can be produced by combining various methods known to those skilled in the art. Multilayered resin stretched film mounts produced by any method are included in the scope of the invention so long as they meet the requirements defined in the invention.

Each of the layers constituting the multilayered resin stretched film of the invention can be formed by mixing the propylene based polymer (A) , the inorganic finer powder and/or organic filler (B), the propylene based random copolymer (C) having a melting point of from 110 to 140 °C, and the polyether ester amide based antistatic agent (D) in prescribed proportions and extruding the mixture, or by other methods.

The laminate is then uniaxially stretched, to produce the multilayered resin stretched film.

The multilayered resin stretched film of the invention may also be produced by individually stretching the substrate layer (i) and the surface layer (ii) and then laminating them, or by laminating the substrate layer (i) and the surface layer (ii) and then stretching together. These methods can be properly combined with each other. A preferred production method is a method including steps of laminating the substrate layer (i) and the surface layer (ii) and then stretching them together. This method is simple and has low production cost as compared to individually stretching the layers and then laminating them.

For stretching, various known methods can be employed. It is preferable to carry out stretching at a temperature of at least 5 °C lower than the melting point of the resin having the lowest melting point among the resins used in each layer. Uniaxial stretching is preferable for stretching, since the blister pack mount is linearly torn in one direction when opened allowing easy removal of the goods.

In mounts having biaxial stretching the tearing direction does not fix making it nearly impossible to remove the goods. Mounts not having stretching extend without tearing also making it nearly impossible to remove the goods. Also, the rigidity required for high-speed paper feeding/discharging in offset printing is insufficient.

Specific examples of the uniaxial stretching method include inter-roll stretching utilizing a difference in peripheral speed among rolls and clip stretching utilizing a tenter oven.

Uniaxial inter-roll stretching allows one to obtain films having adjustable rigidity, opacity and gloss by adjusting the stretch ratio, and hence is preferable.

The stretch ratio is not particularly limited but may be determined while taking into account the purpose of the multilayered resin stretched film of the invention and the characteristics of the resin to be used. Usually, stretching is carried out from 2 to 11 times. In the case of inter-roll stretching utilizing a difference in peripheral speed among rolls, the stretch ratio is more preferably 2 to 7 times, and in the case of clip stretching in a heat oven, the stretch ratio is more preferably from 5 to 11 times.

It is preferable to carry out heat treatment after stretching. It is preferable to choose the temperature of the heat treatment within the range of from the stretching temperature and a temperature of 30 °C higher than the stretching temperature. A ratio of heat shrinkage in the stretching direction is lowered by the heat treatment to minimize a tightening by winding and a surge caused by shrinkage in heat and fusion sealing.

The heat treatment method is generally carried out by rolls or in a heat oven, but may be carried out by combination thereof. These treatments are carried out in a manner where the stretched film is kept under tension and thereby bringing about high treatment effects, and therefore are preferable.

Also, if desired, the surface may be subjected to corona discharge treatment or plasma treatment and may provide advantages such as an improvement in adhesiveness of printing inks, and hence and therefore is preferable. The resulting surface may be' coated with an antistatic agent, an anchoring agent, etc. and then used.

The surface layer (ii) and the back surface of the multilayered resin stretched film of the invention may be printed. The kind and method of printing are not particularly limited. For example, printing can be carried out by known printing such as gravure printing, flexographic printing, silk screen printing, offset printing, letter press printing, UV offset printing, and rotary offset printing, each of which uses inks having a pigment dispersed in a carrier. Also, printing can be carried out by metallic vapor deposition, metallic foil pressing, varnish coating, and melt heat transfer printing, etc. For the sake of carrying out high definition printing, offset printing is preferable.

The multilayered resin stretched film of the invention is useful as a mount for blister pack and can be cared for applications such as header label mounts, vacuum pack packaging mounts, and office supplies such as file binders and mouse pads.

That is, since the multilayered resin stretched film of the invention has excellent printability on the both sides thereof and has opacity such that printed letters or patterns provided on one side are not transmitted into the other side, and has excellent seal strength upon sealing by heat and/or fusion, it is excellent as a mount blister pack containers produced by thermoforming transparent propylene based sheet.

Since the multilayered resin stretched film of the invention is uniaxially stretched, it can be linearly torn with a constant width, and it is excellent in unsealing properties in goods from the blister pack.

The multilayered resin stretched film of the invention preferably has an opacity, as defined in JIS-P-8138, of 70 % or more, and more preferably 80 % or more.

If the opacity is less than 70 %, letters or patterns printed on one side may be transmitted into the opposite side and seen. In the case where a bar code or the like is printed on the back surface of the mount poor quality in reading the bar code is caused during inventory management.

### EXAMPLES

The characteristic features of the invention will be more specifically described below with reference to the following Experimental Examples, Examples, Comparative Examples and Test Example.

The materials, use amounts, proportions, treatment contents, treatment procedures, etc. shown in the following Examples can be properly changed. Accordingly, it should not be construed that the scope of the invention is limited to the following specific examples.

The materials used in the following Examples and Comparative Examples are summarized and shown in Table 1. MFR in the table means a melt flow rate.

### (Experimental Example 1)

### [Production of aromatic ring-containing polyether ester amide]

In a stainless steel-made autoclave having an internal volume of 3 liters, 110 parts of 12-aminodecanoic acid, 16.3 parts of adipic acid, 0.3 parts of Irganox 1010 (a trade name of an antioxidant manufactured by Ciba-Geigy AG), and 7 parts of water were charged, and the inside of the autoclave was purged with nitrogen. Thereafter, the mixture was heated and stirred in a sealed state under pressure at a temperature of 220 °C to obtain 117 parts of a polyamide oligomer containing a carboxyl group at the both terminal ends thereof and having an acid value of 107.

Next, 225 parts of a bisphenol A ethylene oxide adduct having a number average molecular weight of 2, 000 and 0.5 parts of zirconyl acetate were added to the reaction mixture, and the mixture was polymerized for 5 hours under conditions of 245 °C and a reduced pressure of 1 mmHg or less, to obtain a polymer.

This polymer was taken out in a strand form on a belt and pelletized to obtain a polyether ester amide.

This had a reduced viscosity (ηsp/C, m-cresol solvent, 25 °C, C = 0.5 % by weight) of 2.1.

### (Experimental Example 2)

### [Production of modified low-molecular weight polyolefin]

Ninety-five parts of a low-molecular weight polypropylene obtained by heat degradation and having a number average molecular weight of 3, 000 and a density of 0.92 g/cm², 5 parts of maleic anhydride, and 60 parts of xylene were melted at a temperature of 140 °C in a nitrogen gas stream', and a 50 % xylene solution having 1.5 parts of t-butyl peroxide dissolved therein was then added dropwise to the melt over 15 minutes. Thereafter, the mixture was reacted for one hour. After completion of the reaction, the solvent was distilled off to obtain an acid-modified low-molecular weight polypropylene. This had a number average molecular weight of 5,000.

**Table 1**

| Material name | Contents |
|---|---|
| (1) Propylene homopolymer | Propylene homopolymer having an MFR of 4 g/10 min (at 230 °C under a load of 2.16 kg) and a melting point of 164 °C (DSC peak temperature) (Novatec: FY4, manufactured by Japan Polychem Corporation) |
| (2) Ethylene·propylene random copolymer | Ethylene·propylene random copolymer having an MFR of 5 g/10 min (at 230 °C under a load of 2.16 kg) and a melting point of 145 °C (DSC peak temperature) (Novatec: X1804, manufactured by Japan Polychem Corporation) |
| (3) Propylene·ethylene random copolymer polymerized by metallocene catalyst | Propylene·ethylene random copolymer polymerized by metallocene catalyst, having an MFR of 6 g/10 min (at 230 °C under a load of 2.16 kg) and a melting point of 125 °C (DSC peak temperature) (Novatec: XK-1159, manufactured by Japan Polychem Corporation) |
| (4) Calcium carbonate heavy | Dry pulverized calcium carbonate having a mean particle size of 1.2 µm (Softon 1800, manufactured by Shiraishi Calcium Co.) |
| (5) Titanium oxide | Rutile type titanium oxide produced by the chlorine process (CR-10, manufactured by Ishihara Sangyo Kaisha, Ltd.) |
| (6) Antistatic agent | Mixture of 65 % by weight of the "aromatic ring-containing polyether ester amide resin" obtained in Experimental Example (1), 10 % by weight of a polypropylene resin, 15 % by weight of a polyamide resin of nylon 12, and 10 % by weight of the "modified low-molecular weight polyolefin" obtained in Experimental Example (2) |

### [Examples 1 to 5 and Comparative Examples 1 to 4]

Multilayered resin stretched films of the invention (Examples 1 to 5) and multilayered resin stretched films for comparison (Comparative Examples 1 to 4) were produced according to the following procedures, and blister packs were further produced using the same. The kind and amount (% by weight) of materials and stretching conditions as used in producing each film mount are summarized and shown in Table 2. Also, the physical properties and printability of the resulting films and the sealing strength and unsealing properties when processed into a blister pack are summarized and shown in Table 3.

The propylene based polymer, the propylene based random polymer by a metallocene catalyst, the antistatic agent, and the fine power were mixed to obtain compounds [A] and [B] shown in Table 2. The compound [A] and the compound [B] were melt kneaded in three extruders set at 250 °C, the compound [B] was laminated on the both front and back sides of the compound [A] within a die and extrusion molded, and the resulting extrudate was cooled to 70 °C by a cooling device to obtain a three-layer non-stretched sheet.

The three-layer non-stretched sheet was heated at a prescribed temperature shown in Table 2 and then stretched in the machine direction between rolls in a prescribed ratio shown in Table 2, to obtain a uniaxially stretched film. However, in Comparative Example 1, a uniaxially stretched film was obtained in the same manner as described above, heated at 155 °C, and then stretched in the transverse direction in a ratio of 9 times using a tenter stretching machine, to obtain a biaxially stretched film. Also, in Comparative Example 2, stretching was not carried out.

Next, both sides of each of the resulting non-stretched film and stretched films were subjected to corona discharge treatment at 40 w/m²·min using a discharge treatment machine (manufactured by Kasuga Electric Works, Ltd.), to obtain a multilayered resin stretched film.

The layer thickness and physical properties of the resulting multilayered resin stretched films are shown in Table 3.

For the sake of product names and advertisement and product management, information such as bar code was printed by UV offset printing (an ink manufactured by T&K Toka Company; a trade name: "Bestcure 161S") on the front surface and back surface of each of these multilayered resin stretched films. Thereafter, the resulting multilayered resin stretched film was overlaid on a transparent sheet for blister container containing polypropylene as the major component, in which a tooth brush had already been contained, and sealed by a fusion sealer and a heat sealer.

### (Test Example)

With respect to each of the produced multilayered resin film mounts, the opacity was measured. Also, the printability was evaluated. Also, with respect to the produced blister packs, the sealing strength between the container and the mount and the unsealing properties were evaluated.

The details of each of the tests are as follows.

### 1) Opacity:

The opacity was measured in the measurement method according to JIS-Z-8722 using an analyzer (manufactured by Suga Test Instruments Co., Ltd.; a trade name: "SM Color Computer").

### 2) Printability:

One thousand sheets of each of the produced multilayered resin stretched films having a kikuzen full size (636 mm × 939 mm) were printed on the both sides using an ink (manufactured by T&K Toka Company; a trade name: "Bestcure 161S") at a rate of 7,000 sheets/min by a UV offset printing machine manufactured by Heidelberg Druckmaschinen AG.

### a) The paper feeding/discharging properties were evaluated according to the following criteria.

○: Paper feeding/discharging of the 1,000 sheets was continuously carried out without any problem.
Δ: The machine stopped once to thrice in paper feeding.
×: The machine stopped four times or more in paper feeding, and the paper discharging portion was incomplete.

### b) Evaluation of ink adhesiveness:

An adhesive tape (manufactured by Nichiban Co., Ltd.; a trade name: "Cellotape") was stuck on the solid printed surface of the resulting print and thoroughly pressed. Thereafter, the adhesive tape was peeled apart at a constant rate in a direction of 90° against the adhesive surface. How the ink came out from the stretched film mount was visually observed and evaluated according to the following criteria.
○: The ink did not come out at all.
Δ: Resistance was present at the time of peeling the tape, but the ink came out almost entirely, resulting in a problem in practical use.
×: No resistance was present at the time of peeling the tape, and the ink came out entirely so that the product was not practically useful.

### c) Sealing strength:

The produced multilayered resin stretched film was overlaid on a polypropylene based transparent sheet having a thickness of 0.2 mm (manufactured by Idemitsu Petrochemical Co., Ltd.; a trade name: "Pure Softy") and sealed using an impulse sealer (manufactured by Fuji Impulse Co., Ltd.; a trade name: "FI-400Y") under the following conditions. The sealed portion was cut into a width of 10 mm and subjected to 180°-peeling test at a tensile rate of 30 mm/min to determine the sealing strength.

### a) Fusion sealing strength:

Sealing bar: 1 mmφ heating coil
Holding time: 5.5 seconds
Heating temperature: temperature of adhesive
portion: about 180 °C
Heating time: 1.5 seconds

### b) Heat sealing strength:

Sealing bar: 5 mm-width hot plate
Holding time: 5.5 seconds
Heating temperature: temperature of adhesive
portion: about 180 °C
Heating time: 1.5 seconds

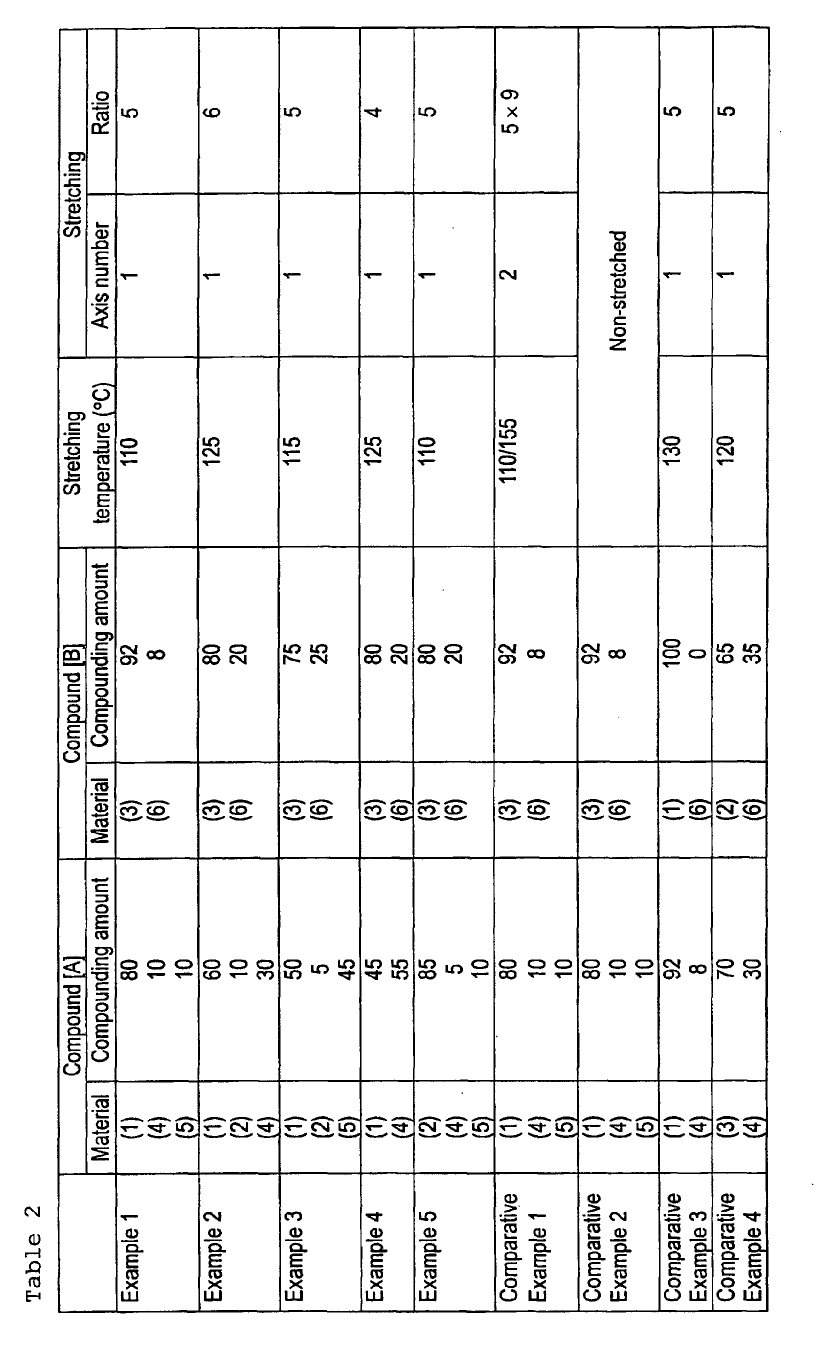

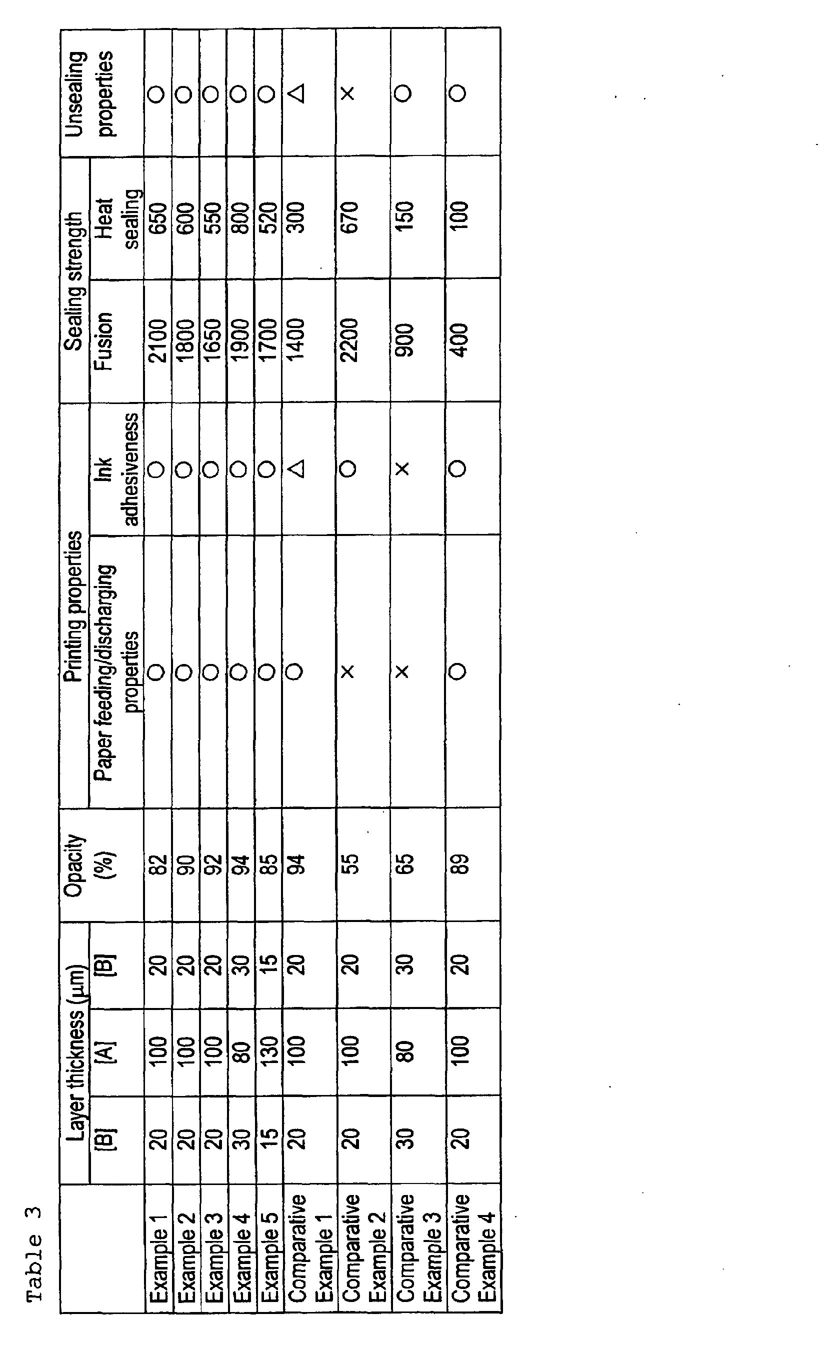

As is clear from the foregoing results, the multilayered resin stretched films of the invention are excellent in opacity and printing properties and when processed into a blister pack, are excellent in sealing strength and unsealing properties (Examples 1 to 5).

On the other hand, the multilayered resin stretched films falling outside the conditions of the invention are inferior in characteristics and not practically useful (Comparative Examples 1 to 4).

While the invention has been described in detail and with reference to specific embodiments thereof, it will be apparent to one skilled in the art that various changes and modifications can be made therein without departing from the spirit and scope thereof.

This application is based on a Japanese patent application filed June 12, 2001 (Japanese Patent Application No. 2001-177326), the contents of which are incorporated herein by reference.

### INDUSTRIAL APPLICABILITY

The multilayered resin stretched film of the invention is white and opaque and is excellent in sheet fed offset printing properties, and when processed into a blister pack, provides a high sealing strength against a container, and has excellent properties in unsealing properties in taking out goods.

For these reasons, the multilayered resin stretched film of the invention can be effectively provided for not only mounts for blister pack but also mounts of header label mounts, vacuum pack packaging mounts, mouse pads, etc.

## Claims

1. A multilayered resin stretched film having an opacity of 70 % or more and capable of being sealed by heat and/or fusion, which comprises: (i) a uniaxially stretched film substrate layer containing (A) from 40 to 90 % by weight of a propylene based polymer and (B) from 10 to 60 % by weight of an inorganic fine powder and/or an organic filler; and, on at least one side thereof, (ii) a printable and uniaxially stretched film surface layer containing (C) from 70 to 95 % by weight of a propylene based random copolymer and (D) from 5 to 30 % by weight of an antistatic agent.

2. The multilayered resin stretched film according to claim 1, wherein the propylene based polymer is selected from the following (a-1) to (a-3):
(a-1) a random copolymer comprising from 2 to 10 % by weight of ethylene and from 90 to 98 % by weight of propylene,
(a-2) a random copolymer comprising from 0 to 5 % by weight of ethylene, from 8 to 30 % by weight of butene-1, and from 65 to 92 % by weight of propylene, and
(a-3) a propylene homopolymer.

3. The multilayered resin stretched film according to claim 1, wherein the inorganic fine powder (B) is a compound mainly containing calcium carbonate or titanium oxide.

4. The multilayered resin stretched film according to claim 1, wherein the propylene based random copolymer (C) is a propylene-ethylene random copolymer or a propylene-butene-1 random copolymer, which are polymerized by a metallocene catalyst and have the following characteristics (b-1) and (b-2):
(b-1) an extraction amount, as extracted at 40 °C using o-dichlorobenzene as a solvent, is not more than 4.0 % by weight, and
(b-2) a melting peak temperature by DSC is in the range of from 110 to 140 °C.

5. The multilayered resin stretched film according to claim 1, wherein the propylene based random copolymer (C) is a random copolymer comprising from 2 to 10 % by weight of ethylene and from 90 to 98 % by weight of propylene or a random copolymer comprising from 0 to 5 % by weight of ethylene, from 8 to 30 % by weight of butene-1, and from 65 to 92 % by weight of propylene, each having a melting peak temperature by DSC of from 110 to 140 °C.

6. The multilayered resin stretched film according to claim 1, wherein the antistatic agent (D) is a resin composition comprising a polypropylene based resin, an aromatic ring-containing polyether ester amide, a polyamide resin, and a modified low-molecular weight polypropylene.

7. The multilayered resin stretched film according to claims 1 to 6, wherein the uniaxially stretched film is one heat stretched among rolls and/or within an oven.

8. A blister pack comprising a transparent polypropylene based sheet container formed by thermoforming as a packaging container, which is sealed from the upper face by heat and/or fusion, wherein goods are stored, and the multilayered resin stretched film according to claims 1 to 7, both sides of which are printed, is overlaid on the opened face of the container.
